Europäisches Patentamt

European Patent Office

Office européen des brevets

(19)

(11) Publication number: **0 075 078**
A1

# (12) EUROPEAN PATENT APPLICATION

(21) Application number: **82105727.0**

(22) Date of filing: **28.06.82**

(51) Int. Cl.³: **F 02 N 15/10, B 60 R 25/04**

(30) Priority: **27.06.81 JP 100260/81**

(43) Date of publication of application: **30.03.83**
**Bulletin 83/13**

(84) Designated Contracting States: **DE FR GB IT NL**

(71) Applicant: **Yano, Teruyuki, 697, Kamisone**
**Kokuraminami-ku, Kitakyushu-shi Fukuoka-ken (JP)**

(72) Inventor: **Yano, Teruyuki, 697, Kamisone**
**Kokuraminami-ku, Kitakyushu-shi Fukuoka-ken (JP)**

(74) Representative: **Patentanwälte Müller-Boré, Deufel,**
**Schön, Hertel, Lewald, Otto,**
**Postfach 86 07 20 Siebertstrasse 4,**
**D-8000 München 86 (DE)**

(54) **Cipher reading device preventing unauthorized vehicle use.**

(57) Cipher reading device which can effectively prevent cars from being stolen is disclosed. The cipher reading device allows the operation of an engine starting circuit only when a code designated by the driver coincides with a cipher set in advance in the cipher reading device. The device further includes an auxiliary licence checking device which prevents the driving of a car without a licence.

EP 0 075 078 A1

ACTORUM AG

COMPLETE DOCUMENT

0075078

## 3. BACKGROUND OF INVENTION:

This invention relates to a device for preventing a car from being stolen or being driven without a licence, or being driven with a licence not applicable to the car.

The above illegal driving has sharply increased in the last decade. However, no effective measure have been taken heretofore.

Accordingly, it is an object of the present invention to provide a device to prevent starting the engine of a vehicle without an appropriate engine key or licence. The driver can not drive the car without such appropriate key or licence, thereby effectively preventing the illegal driving.

The present invention, in summary, discloses a cipher reading device which operates an engine starting circuit of a car when a code designated by a driver coincides with a cipher set in advance in the cipher reading device. The device further includes an auxiliary licence checking device which comprises a licence inserting portion and for accomodating the driver's licence and a device for judging a code on the driver's licence which indicates a type of licence.

## 4. BRIEF EXPLANATION OF DRAWINGS:

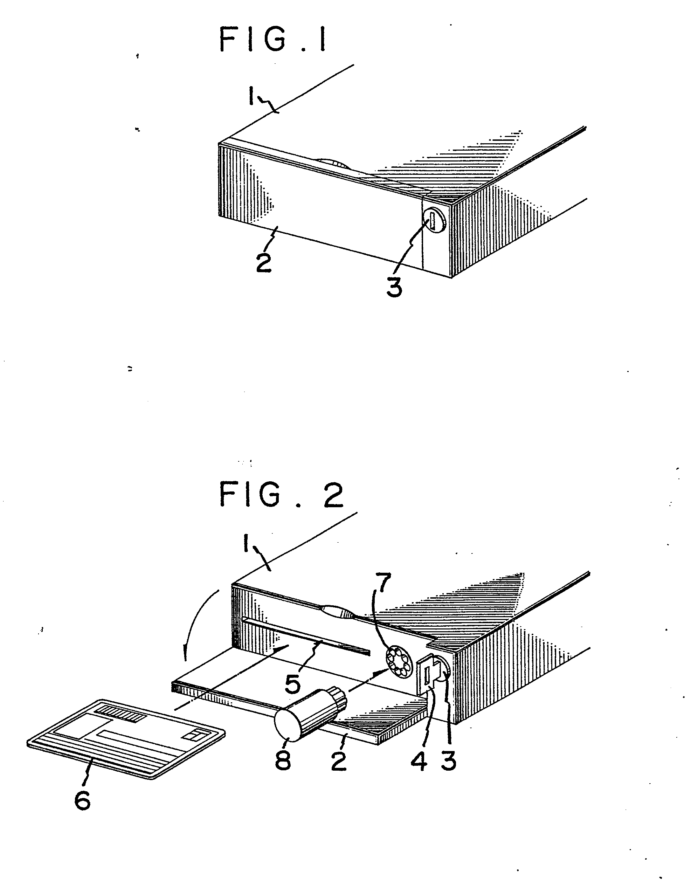

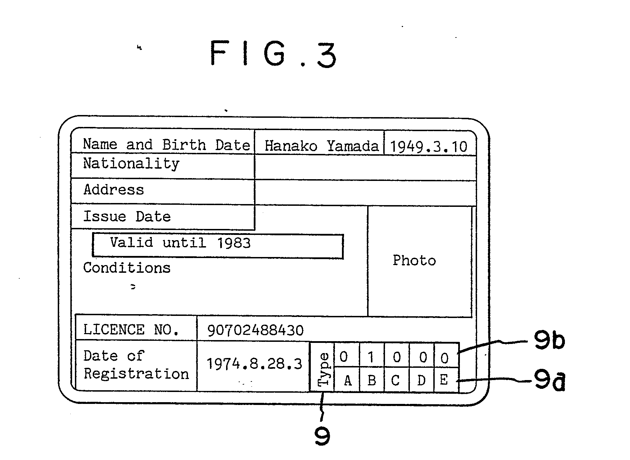

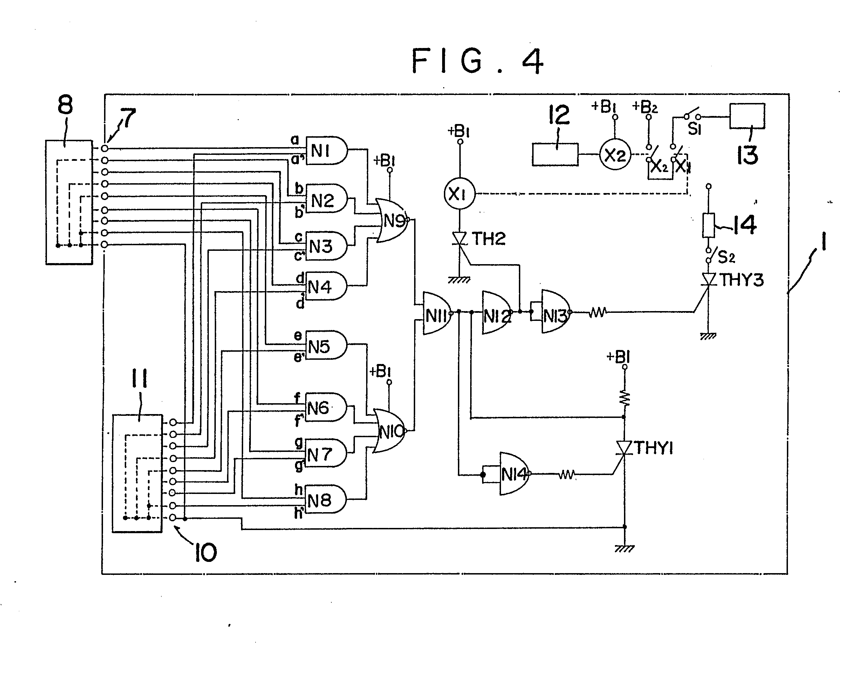

Fig. 1 is a perspective view of a device of the present invention with the cover thereof in a closed position, Fig. 2 is a perspective view of the device with the cover thereof in an open position, Fig. 3 is a plan view of a driver's licence provided with a column which shows types of driving qaulification and Fig. 4 is a circuit diagram of the device of the present invention.

5. DETAILED DESCRIPTION OF THE DISCLOSURE:

Hereinafter, the present invention will be explained in view of an embodiment shown in the drawing.

In Fig. 1, a front portion of a device case 1 which is provided with a cover 2 is shown. A key device 3 for opening the cover 2 is mounted on the front face of the case 1. The key device 3 is operated by a door key 4 of a car. The device case 1 is also provided with a licence inserting portion 5 and a pin connector on the front face thereof into which a driving licence 6 and a pin-equipped key 8 are inserted respectively.

In the above construction, a cipher reading device comprises a combination of pin connector 7 and the pin-equipped key 8, while an auxiliary licence checking device comprises the licence inserting portion 5 and a qualification judging device which will be described in detailes later.

To facilitate the understanding of the invention, the auxiliary licence checking device is explained first.

As shown in Fig. 3, the driver's licence of this embodiment has a column of driving qualification 9, wherein various types of licences A, B, C, D, E are indicated on a lower column 9a and the validity of the licence corresponding to the type of the licence is indicated by a code "1" or "0" on an upper column 9b. Types A, B, C, D, E, for example, may be a bus, a passenger car, a light-duty truck, a heavy-duty truck and a special-use car, respectively.

A device for reading out the code "1" or "0" indicating the validity of the licence, is incorporated in the licence inserting portion 5 of the case 1. The device judges whether the code on the licence corresponding to the type of car to which the device is attached, is "1" or "0". If the type of car is B, for example, "1" must be indicated in the upper column 9b corresponding to the lower column 9a indicating B as the type of the licence in the column of driving qualification 9. Accordingly, if the device reads out "0", this implies that the licence is not valid. In order to read out the code, end portions of a pair of optical fibers are disposed in the device adjacent to the position on the upper column 9b which corresponds to the position on the column of driving qualification 9 on the driver's licence 6. The light from a light source is applied to one of the optical fibers, and the reflected light from the code of the upper column 9b is received by an end surface of the other optical fiber, and is input to a photoreceptive element such as a phototransistor, wherein the judgement whether the code is "1" or "0" can be made by the quantity of the reflected light. Furthermore, if the format of the licence is varied, other judging methods can be also used, for example, a method which indicates the validity of the qualification of the licence by the presence of the holes used as the qualification code, and detects the holes by an optical transmission-type photoconductive device, or a method which records the necessary matters in a magnetic tape mounted on a surface of the licence and reads out the information by a magnetic head.

After the above-mentioned device judges whether the inserted licence is appropriate for the vehicle, usually an engine starting circuit is operated. In addition, a microswitch may be disposed inside the inserting portion 5 so that a power source of the device is turned on when the licence 6 is inserted into the inserting portion 5.

The cipher reading device is explained hereinafter. As one of the embodiments thereof, the pin connector 7 and the pin-equipped key 8 may be used as shown in Fig.

2, and the circuit thereof is shown in Fig. 4. In this case, the pin connector 7 and the pin-equipped key 8 each have nine terminals. One terminal is connected to earth, and the other eight terminals are respectively connected to one side of input terminals (a) to (h) of exclusively-or circuits N1 to N8. The exclusively-or circuits N1 to N8 have a second group of input terminals (a') to (h') thereof also connected with corresponding eight terminals of a pin connector 10 disposed in the case 1, and the remaining one terminal of the connector 10 is connected with the earth connecting terminal of the pin connector 7. Inside the pin-equipped key 8, the earthed pin is connected with other desired pins. Furthermore, a pin-equipped key 11 which is connected with the pin connector 10 is also disposed inside of the case 1, wherein the pins in the key 11 are connected with the earth in a completely same combination as pins in the pin-equipped key 8.

Accordingly, before the pin-equipped key 8 is inserted into the pin connector 7, the level of input terminals (b'), (d'), (e') and (h') of the circuits N2, N4, N5 and N8 among the exclusively-or circuits N1 to N8 among the exclusively-or circuits N1 to N8 are low, while the levels of the other terminals (a), (a'), (b), (c), (c'), (d), (e), (f), (f'), (g), (g'), (h) are high. Therefore, the levels of the outputs of all exclusively-or circuit N1 to N8 are high.

When the pin-equipped key 8 is inserted, the levels of the input terminals (b'), (d'), (e') and (h') of the exclusively-or circuits N2, N4, N5 and N8 become low so that the levels of the all outputs (a) to (h) and (a') to (h') of the exclusively-or circuits N1 to N8 become low, and the level of the outputs of NAND circuits N9 and N10 become high. Accordingly, the level of the output of NAND circuit N11 becomes low and the level of the output of NOT circuit N14 becomes high, and a thyristor THY 1 is turned on. Once the thyristor THY 1 is on, the high level of the output of NAND circuit N12 is held even if the pin-equipped key 9 is drawn out. Therefore, even when the key 9 is used also as an engine key, the key can be readily drawn out and used for starting the engine. When the level of the output of NAND circuit becomes high, a thyristor THY 2 is on, and a relay X1 is operated to close the contact X1. Referring to other components of the circuit, numeral 12 indicates a driver's qualification judging device, numeral 13 indicates an initial starting motor circuit and numeral 14 indicates a warning circuit. Furthermore, S1 indicates a key switch of a car, S2 indicates a microswitch which is turned on when a licence is inserted into a licence inserting portion, X2 indicates a relay which is operated by the output of the device for judging that the licence is appropriate for the car.

Accordingly, even if the licence is inserted, the level of the output of NAND circuit N13 becomes high unless the pin-equipped key 8 is inserted, or the pin-equipped key 8 is appropriate, thereby a thyristor THY 3 is on, and the warning circuit 14 is operated to warn of unlawful driving. A buzzer, a bell or a klaxion may be operated by the warning circuit.

As mentioned above, the engine can be started only when the conditions such as the driving qualification and the inserting of the appropriate pin-equipped key, are satisfied. With regard to the cipher reading device, it may also be possible to mount a ten-key board on the case 1 so that the driver can push a number of keys and start the engine only when the number pushed by the driver coincides with the line of numbers memorized in the circuit in advance.

According to the present invention, driving without a licence or without the necessary qualifications can be prevented and attempts to steal the car can be resisted.

Claims

What we claim is:

1.  A cipher reading device characterized by operating
an engine starting circuit of a car when a code designated by a driver coincides with a cipher set in advance
in said cipher reading device.

2.  A cipher reading device according to claim 1, wherein said device is a pin connector into which said driver
inserts a pin-equipped key, and said engine starting
circuit is operated when a combination of short-circuits
provided among a plurality of pins of said pin-equipped
key coincides with a logical circuit set in advance in
said pin connector.

3.  A cipher reading device according to claim 1, wherein said device comprises a ten-key board and a cipher
memory circuit, and said engine starting circuit is operated when cipher numerals on said ten-key board pushed
by said driver coincide with cipher numerals set in
advance in said cipher memory circuit.

4.  A cipher reading device according to claim 1, wherein said device further includes an auxiliary licence
checking device which comprises a licence inserting portion for accomodating said driver's licence and a device for judging a code on said driver's licence which indicates the type of licence.

5. A cipher reading device according to claim 4, wherein said device is of a photoelectric type which judges said code on said driver's licence by the quantity of light reflected from said driver's licence.

6. A cipher reading device according to claim 4, wherein said device is of an electromagnetic type which judges said code on said driver's licence from a magnetic recording medium formed on said driver's licence.

# FIG.1

# FIG.2

# F I G . 3

| Name and Birth Date | Hanako Yamada | 1949.3.10 |
|---|---|---|
| Nationality | | |
| Address | | |
| Issue Date | | |

Valid until 1983

Conditions

Photo

| LICENCE NO. | 90702488430 | | | | | |
|---|---|---|---|---|---|---|
| Date of Registration | 1974.8.28.3 | Type | 0 | 1 | 0 | 0 | 0 |
| | | | A | B | C | D | E |

9b

9a

9

FIG. 4

## European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A-2 027 126 (CARTER)<br>*Page 1, lines 40-66; figures* | 1,2 | F 02 N 15/10<br>B 60 R 25/04 |
| X | US-A-4 192 400 (McEWAN)<br>*Column 1, line 66 - column 2, line 26* | 1,2 | |
| X | US-A-4 090 089 (MORELLO)<br>*Column 1, line 66 - column 2, line 12; figures 1,4* | 1,3 | |
| X | US-A-3 634 880 (HAWKINS)<br>*Column 2, lines 14-59; figure 2* | 1 | |
| A | US-A-4 072 850 (McGLYNN)<br>*Column 2, lines 11-24; column 3, lines 44-68; figure 1* | 4,6 | |
| A | FR-A-2 191 786 (G.I.T.A.C.)<br>*Page 1, lines 40 - page 2, line 13; figures* | 5 | TECHNICAL FIELDS SEARCHED (Int. Cl. ³)<br><br>F 02 N<br>B 60 R |
| A | US-A-3 629 835 (BROWN)<br>*Column 2, line 58 - column 3, line 36; figure 1; column 5, line 46 - column 6, line 6; figure 7* | 5 | |
| A | US-A-3 851 505 (WILKINSON) | | |

-/-

The present search report has been drawn up for all claims

| Place of search | Date of completion of the search | Examiner |
|---|---|---|
| THE HAGUE | 04-10-1982 | BIJN E.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

## EUROPEAN SEARCH REPORT

European Patent
Office

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | FR-A-2 271 956 (PONS) | | |

-----

TECHNICAL FIELDS
SEARCHED (Int. Cl. ³)

The present search report has been drawn up for all claims

| Place of search | Date of completion of the search | Examiner |
|---|---|---|
| THE HAGUE | 04-10-1982 | BIJN E.A. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO Form 1503 03 82